# EUROPEAN PATENT SPECIFICATION

(11) **EP 2 401 038 B1**
(45) Date of publication and mention of the grant of the patent: **05.12.2012**
(21) Application number: 09764313.4
(22) Date of filing: 07.10.2009
(51) Int. Cl.: A63B 29/02, B64D 17/30, A62B 35/00

(54) **ELEMENT FOR THE ATTACHMENT OF PARTS OF A SAFETY HARNESS**
ELEMENT ZUM ANBRINGEN VON TEILEN EINES SICHERHEITSGURTS
ÉLÉMENT POUR LA FIXATION DES PIÈCES D'UN HARNAIS DE SÉCURITÉ

(30) Priority: 26.02.2009 IT MI20090279
(43) Date of publication of application: 04.01.2012
(73) Proprietor: Camp S.p.A., 23834 Premana (Lecco) (IT)
(72) Inventor: CODEGA, Antonio, I-23834 Premana, Lecco (IT)
(74) Representative: Long, Giorgio
(86) International application number: PCT/IT2009/000452
(87) International publication number: WO 2010/097824

(56) References cited:
- EP-A- 1 712 259
- WO-A-98/01187
- US-A1- 2006 157 298

## Description

The present invention refers to an element for the attachment of parts of a safety harness and a harness provided with such attachment element.

Harnesses serve to secure a user in predetermined conditions. For example, safety harnesses are used for securing the user during sports or professional activities that expose the user to the risk of falling, mountain climbing, off the ground operations at work or mountain rescue operations as well as acrobatic courses in height.

A known example of a harness comprises a belt and a pair of thigh straps. The belt and thigh straps are joined at the front by a removable attachment element and at the rear by a pair of bands. Once the harness is worn, a safety ring allows the user to have a hooking point substantially arranged at the height of his barycentre. A safety rope may be attached to such hooking point, by means of a suitable attachment element.

The safety ring is usually of the fixed type, i.e. non-openable, and it is associated to the harness through a special loop provided for in the attachment element.

Chest straps provided with shoulder straps suitable to wrap the shoulders of the user may be associated to the harnesses. The chest straps are usually attached at the front and rear to the belt and they must be at least partially detachable therefrom to allow the user to wear the harness easily. For such purpose, the chest straps include a front central element associated to which is an attachment element which is inserted into the loop of the harness (the same that receives the safety ring), which thus has the double function of receiving the safety ring and receiving the attachment element for closing the chest strap.

Such known harness however reveals some drawbacks.

Given that the attachment element loop receives both the safety ring and the attachment element for closing the chest strap, such elements inevitably interfere with each other clanking and intertwining with respect to each other.

First and foremost, this implies possible deterioration and rapid wear thereof, with the ensuing risks of being damaged and thus lack of safety for the user.

Furthermore, given this configuration of the attachment element, it often happens that the safety ring, free to move rather freely inside the loop, acquires wrong positions with respect to its safety function. Such problem worsens further in cases where the harness is used without the chest strap. As a matter of fact, in this case the loop receives the safety ring alone, which thus has a wider range of movement, with the risk of acquiring non-ideal positions and positions not ideal for its safety function.

A further consequence of the erroneous positioning of the safety ring could be the damaging of the attachment element loop due to loads concentrated in given areas instead of being distributed evenly.

The prior-art document EP 1 712 259 discloses an element for the attachment of parts of a safety harness, comprising a main loop suitable for removable attachment to a chest strap of the harness, whereby it comprises an auxiliary loop distinct from said main loop and arranged inside the latter. The two part form of appended claim 1 is based on the disclosure of this document.

Therefore, an object of the present invention is that of providing an element for the attachment of parts of a safety harness such to at least partly overcome the abovementioned problems with respect to the prior art.

In particular, an object of the present invention is that of providing an element for the attachment of a safety element capable of guaranteeing correct and stable positioning of the safety ring during use and capable of maintaining such function regardless of the fact whether the harness is associated to a chest strap or not.

These and other objects are attained by an element for the attachment of parts of a safety harness according to claim 1.

The dependent claims regard further advantageous aspects or embodiments of the present invention.

For a better understanding of the present invention and outlining advantages thereof, following are descriptions of its exemplifying and non-limiting embodiments, with reference to the attached figures, wherein:
Figure 1 is a front view of a harness provided with an attachment element according to the invention;
Figure 2 is a front view of an attachment element according to the invention;
Figure 3 is a side view of a portion of the attachment element in figure 2;
Figure 4 is a side view of a portion of the attachment element in figure 2 in a particular condition of use;
Figure 5 is a sectional schematic view of a detail of the attachment element in figure 2;
Figure 6 is a front schematic view of a component of the attachment element in figure 2.

Referring to the figures, a safety harness for securing a user is indicated in its entirety with 1. The harness 1 may for example be used for sports activities such as mountain climbing activities or professional activities that expose the user to the risk of falling.

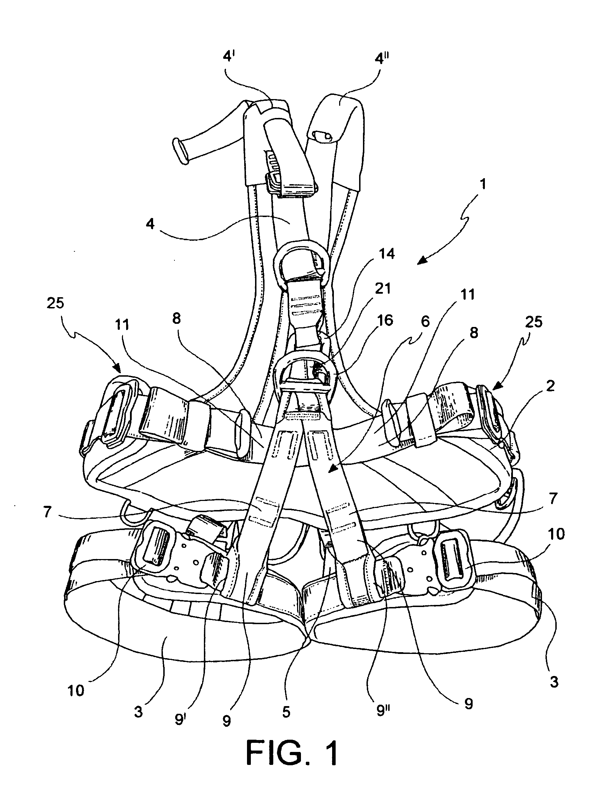

According to the embodiment represented in figure 1, the harness 1 comprises a belt 2 and a pair of thigh straps 3. The belt 2 is intended to wrap the user (not shown in the figures) around the waist, while the thigh straps 3 are intended to wrap the thighs of the user during use.

Optionally, the harness 1 may comprise a chest strap 4, preferably removable. The chest strap 4 comprises two shoulder straps 4' and 4'' adapted to wrap the shoulders of the user. The chest strap 4 is preferably attachable to the belt 2 in front and rear position. Possible methods for attaching the chest strap 4 to the belt 2 at the front shall be described in detail hereinafter.

In the present description and in the attached claims, it should be observed that, the terms "front", "rear", as well as "upper" and "lower" conventionally refer to the condition of the harness worn by the user. Consequently, the term "upper" side is used to indicate the side of the harness corresponding to the side of the head of the user, the term "lower" side is used to indicate the side of the harness corresponding to the side of the feet of the user, the term "front" side is used to indicate the side of harness corresponding to the chest of the user, and the term "rear" side is used to indicate the side of the harness corresponding to the back of the user.

The thigh straps 3 are attached or are attachable to the belt 2. In particular, preferably, the thigh straps 3 are attached to the belt at the rear, for example by means of bands 5, both elastic and non-elastic.

In order to obtain the front attachment of the thigh straps 3 and of the belt 2, instead, the harness is advantageously provided with an attachment element 6 according to the invention.

Advantageously, for such purpose the attachment element 6 comprises portions 7 for attaching to the thigh straps 3 and portions 8 for attaching to the belt 2.

According to a possible embodiment, the portions 7 for attaching to the thigh straps 3 include bands 9, preferably made of textile material, having an elongated form relatively arranged in such a manner to form an overturned "V", i.e. spaced from each other from the upper area towards a lower area of the attachment element. At their lower ends, the bands 9 for attaching to the thigh straps 3 preferably include loops 9' and 9'' into which the thigh straps 3 may be inserted. As a matter of fact, the thigh straps 3 are usually configured as fabric bands, preferably reinforced and/or padded, and they are provided with per se known closure means 10, usually adjustable in such a manner to adapt the circumference of the thigh straps to the physical characteristics of the users.

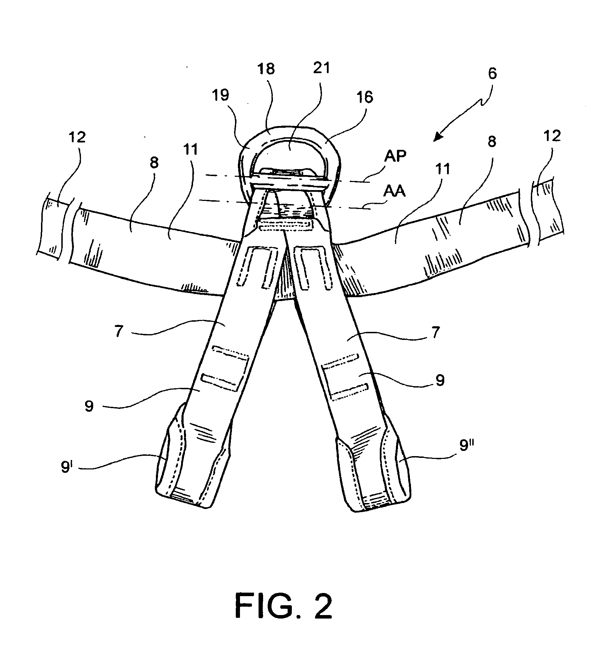

According to a possible embodiment, the portions 8 for attaching to the belt 2 comprise two extended bands 11, for example made of textile material (regarding this, see also figure 2). Alternatively, the portions 8 for attaching to the belt 2 may include a single band provided with band-like portions 11, also preferably made of textile material. Such bands/band-like portions 11 for attaching to the belt 2 are preferably oriented transversely with respect to the bands 9 for attaching to the thigh straps 3 in such a manner to identically project laterally from each of them. Even more preferably, the bands/band-like portions 11 for attaching to the belt 2 are arranged in proximity to the area wherein the bands 9 for attaching to the thigh straps 3 meet, hence in proximity to the upper area of the attachment element 6. According to a possible embodiment, the bands/band-like portions 11 for attaching to the belt 2 are sewn, preferably at the rear, to the bands 9 for attaching to the thigh straps 3. According to an embodiment, ends 12 of the bands/band-like portions 11 for attaching to the belt 2 are free and may be attached to the belt 2 through special per se known attachment means 25, preferably adjustable.

Alongside the function of attaching the belt 2 and the thigh straps 3, the attachment element 6 has the further function of allowing the reversible closure - in front position - of the chest strap 4, when this is provided for, in such a manner that the harness 1 may be easily worn by the user.

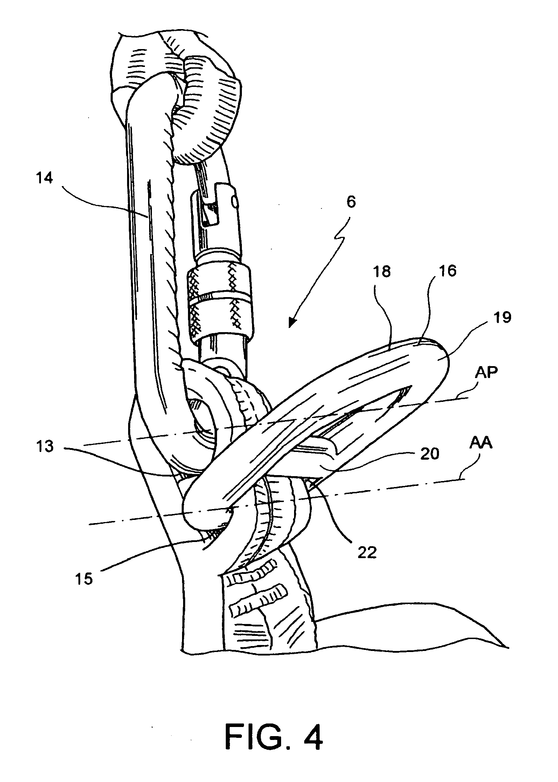

For such purpose, the attachment element 6 includes a main loop 13 for attaching to the chest strap 4 of the harness 1. Such attachment may occur through special removable attachment means. For example, the attachment element 6 may be attached to the chest strap 4 through an attachment element 14 insertable into main loop 13 of the attachment element 6 (figures 1 and 4).

In order to facilitate the operations of wearing the harness 1 by the user, the main loop 13 is preferably arranged in an upper position of the attachment element 6. Even more preferably, such main loop 13 is located in the uppermost portion of the attachment element 6, above the portions 8 for attaching to the belt 2, in particular above the bands/band portions 11 for attaching to the belt 2, in such a manner to project at the upper part and thus be easy to attach to and detach from the attachment element 14 by the user when wearing the harness.

In use, the attachment element 6 is preferably arranged at the front with respect to the user, just like the attachment between the attachment element 6 and the attachment element 14 occurs at the front. Provided for at the rear may be further attachment means (not shown in the figures) between the belt 2 and the chest strap 4. Such attachment means may be fixed, i.e. irremovable, or, alternatively, removable, in such a manner to allow the use of the harness 1 both with and without the chest strap 4.

The attachment element 6 comprises an auxiliary loop 15 and a safety ring 16 for attaching to one or more safety elements. For example, the safety ring 16 may be used for attaching the attachment element 6, and thus the harness 1 to which it is attached, to a fall arrest anchorage (not shown in the figures).

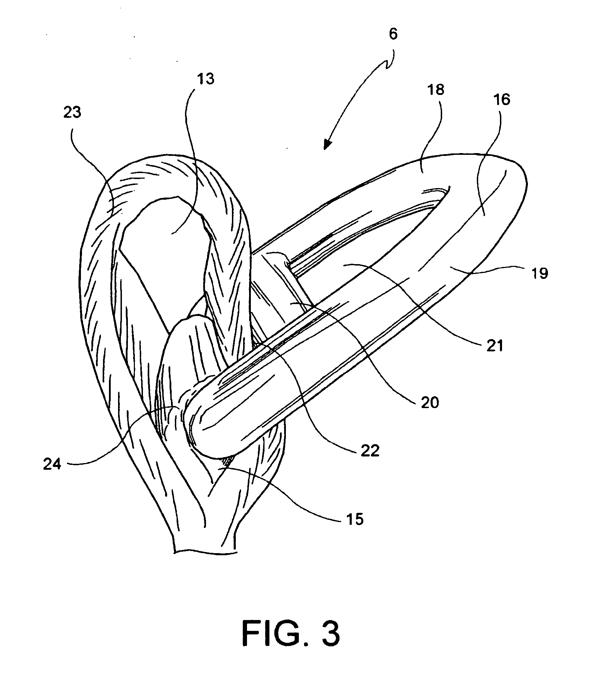

The auxiliary loop 15 is distinct with respect to the main loop 13 and the safety ring 16 is irreversibly attached to the attachment element 6 through a sort of ring attachment portion 17 irreversibly inserted into the auxiliary loop 15 (figures 3 and 4).

It should be observed that the expression "irreversibly attached" is to be intended with reference to the normal conditions of use of the harness. When suspended, the weight of the user is transferred onto the harness through the safety ring and through the auxiliary loop. It is thus clear that the resistance of the attachment between the safety ring and the auxiliary loop in such conditions must be ensured. In order to ensure the safety of the user, the safety ring is inserted into the auxiliary loop during the manufacturing of the attachment element in such a manner not to be extractable manually without damaging or altering the attachment element itself.

Under use conditions, interference between the attachment element 14 and the safety ring is avoided due to the configuration of the safety element, 6 in particular due to the fact that the main loop 13 - intended to accommodate the attachment element 14 (or similar attachment means) - and the auxiliary loop 15 - which accommodates the safety ring 16 - are distinct with respect to each other.

Furthermore, given that the safety ring is received in the auxiliary loop irreversibly, it is possible to dimension the auxiliary loop and position the safety ring therein in such a manner that the safety ring is maintained in the most suitable position or positions when using the harness.

Lastly, the harness provided with the attachment element according to the invention may be indistinctively used with or without the chest strap without jeopardizing functionality thereof. As a matter of fact, given that the auxiliary loop and the main loop are distinct with respect to each other, whether the attachment element is present in the main loop or not has no impact on the proper positioning of the safety ring in the auxiliary loop.

According to a particularly advantageous aspect of the invention, the auxiliary loop 15 is arranged in the main loop 13 itself. This reduces the overall dimensions of the attachment element. Preferably, the auxiliary loop 15 is positioned in the main loop 13 in a lower position of the latter which, as mentioned above, is preferably positioned in an upper position of the attachment element 6, even more preferably arranged above the bands 11 for attaching to the belt 2.

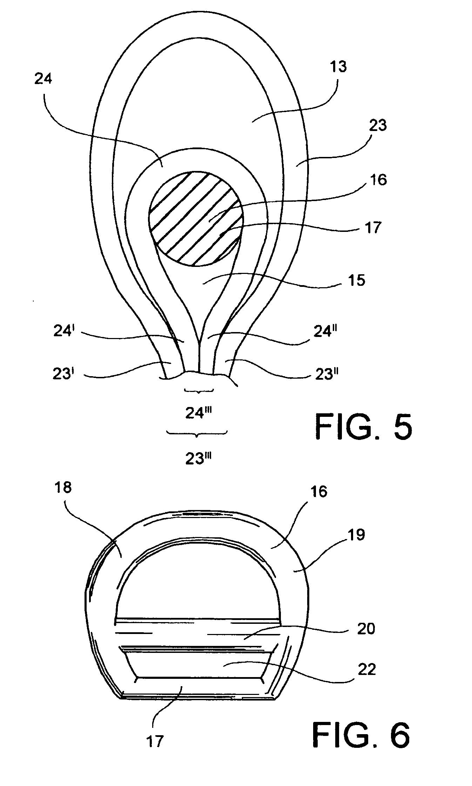

The main loop 13 and the auxiliary loop 15 are preferably delimited by respective fabric bands or fabric band portions of the main loop 23 and auxiliary loop 24, respectively (figures 3 and 5).

In order to obtain the respective positioning of the auxiliary loop 15 into the main loop 13 in a lower position of the latter, for example the following arrangement of the fabric bands/fabric band portions of the main 23 and auxiliary 24 loop is possible. Both the fabric bands/fabric band portions of the main loop 23 and auxiliary loop 24 are folded on themselves in such a manner to delimit the respective main loops 13 and auxiliary loop 15. For each of the fabric bands/fabric band portions of the main loop 23 and auxiliary loop 24 two respective fabric strips may be drawn close to each other and joined together, for example by sewing. In particular, the main loop 13 may be folded on itself in such a manner that two of its strips 23' and 23" may be drawn close to each other and sewn at a sewing area 23''' and, analogously, the auxiliary loop 15 may be folded on itself in such a manner that two of its strips 24' and 24" may be drawn close to each other and sewn at a sewing area 24'''. Advantageously, the fabric strips 24' and 24'' of the auxiliary loop 15 are arranged between the fabric strips 23' and 23'' of the main loop 13 and sewn thereon. The fabric strips 23' and 23" of the main loop 13 are thus in turn mutually sewn with the fabric strips 24' and 24'' of the auxiliary loop arranged therebetween. In this manner, the sewing area 23''' of the main loop 13 and the sewing area 24''' of the auxiliary loop 15 are overlapped. In order to irreversibly attach the safety ring 16 to the attachment element 6, the ring attachment portion 17 is arranged in proximity to the fabric band/fabric portion of the auxiliary loop 24 which is wound around it and then sewn as described above.

It should be observed that, as a sewing method, a single seam joining the fabric strips of the main loop and auxiliary loop could be performed. Otherwise, in order to further increase the resistance of the loops, the fabric strips of the auxiliary loop may be sewn first and followed by a further external sewing to sew the fabric strips of the main loop and also the fabric strips of the auxiliary loop.

The main loop 13 and the auxiliary loop 15 preferably develop according to the rectilinear axes. In particular, the main loop 13 develops according to an axis of the main loop AP and the auxiliary loop 13 develops according to an axis of the auxiliary loop AA. According to a possible embodiment, such axes of the main loop AP and auxiliary loop AA are substantially parallel to each other. Advantageously, such axes are further oriented in such a manner to be - during use, i.e. when the harness 1 is worn by the user - substantially orthogonal to the axis of the user himself (i.e. the axis along which the user develops in height) and approximately parallel to a median plane (not illustrated in the figures) passing across the arms and legs of the user.

Preferably, the auxiliary loop 15 develops along the axis of the auxiliary loop AA for a length approximately equivalent or slightly shorter than the length of the main loop 13 along the axis of the main loop AP. In this manner, the portions of the safety ring 6 that project from the auxiliary loop 15 are substantially external with respect to the main loop 13.

In order to obtain such configuration, the safety ring 16 advantageously comprises an annular portion 18 which delimits the ring itself laterally. The annular portion 18 includes the ring attachment portion 17 inserted in the auxiliary loop 16 and a generally curved portion 19 which interconnects the ends of the ring attachment portion 17.

According to a possible embodiment, the safety ring 16 comprises a separation element 20 which divides the safety ring into two portions. Preferably, the separation element 20 is attached to the annular portion 18 of the safety ring 16 at the two symmetrically opposite points. Due to the presence of the separation element 20, formed in the safety ring 16 are two distinct loops, in particular a main ring loop 21 and an auxiliary ring loop 22. The main ring loop 21 is delimited at the upper part and laterally by the curved portion 19 and at the lower part by the separation element 20. The auxiliary ring loop 22 is instead delimited at the upper part by the separation element 20, at the lower part by the ring attachment portion 17 and laterally by the lower portions of the curved portion 19.

Such configuration of the safety ring makes its irreversible attachment to the attachment element 6 and its maintenance inside predetermined positions under normal use conditions safe.

Advantageously, as a matter of fact, the safety ring 20 is attached to the attachment element 6 in such a manner that the separation element 20 of the safety ring 16 is external to the main loop 13 and the auxiliary loop 15.

According to a possible embodiment, such positioning is obtained by inserting the fabric band/fabric band portion 23 of the main loop 13 into the auxiliary ring loop 23 of the safety ring 16 and subsequent sewing thereof as described above. In this manner, once the attachment element 6 is assembled, the ring attachment portion 17 is inserted in an irremovable manner into the auxiliary loop 16 delimited by the fabric band/fabric band portion 24 of the auxiliary loop and therefore the safety ring may rotate around the axis of the auxiliary loop AA. Such rotations are partly hindered and thus limited by the fabric band/fabric band portion of the main loop 23, which interferes with the separation element 20 of the safety ring 16.

Preferably, the auxiliary loop 15 and the ring attachment portion 17 have sections substantially complementary with respect to each other. Such configuration is obtainable due to the flexibility of the fabric which forms the fabric band/fabric band portion of the auxiliary loop 24 which can be made to adhere to the external wall of the ring attachment portion 17. In this manner, the safety ring 16 substantially cannot perform rotations further than those around the axis of the auxiliary loop AA. In other words, the safety ring 16 may rotate with respect to the attachment element 6 solely around the axis of the auxiliary loop AA.

Advantageously, the ring attachment portion 17 has a length approximately equivalent to the extension of the auxiliary loop 15 along the axis of the auxiliary loop AA. Even more advantageously, the separation element 20 of the safety ring 16, which preferably develops approximately parallel to the axis of the auxiliary loop AA, has a length approximately equivalent or slightly shorter with respect to the width of the fabric band/fabric band portion 23 of the main loop 13. Due to such configuration, the safety ring 15 is substantially hindered from performing translational movements, in particular along the axis of the auxiliary loop AA, with respect to the attachment element 6.

It should be observed that, when the terms "fabric" or "textile material" are used in this description and in the attached claims, they generally indicate a textile material having its own characteristics and/or processed and/or woven in such a manner to be robust and suitable for the safety function as well as resistant to stress (generally greater than the weight of the user, in that it should support the user in case of accidental falls and thus also in presence of considerable inertia forces) that the attachment element 6 and the harness provided with such element are required to perform. Furthermore, the textile material should preferably resist against abrasion due to the possible fiction against the rock, metal structures, concrete, or the like, exposure to intense ultraviolet rays, sharp temperature excursions and so on and do forth.

From the description provided above the man skilled in the art may observe how the attachment element according to the invention allows isolating the safety ring from possible further attachment elements, such as for example an attachment element for closing the chest strap. As a matter of fact, providing for an auxiliary loop distinct with respect to the main loop allows the safety ring to be prepared once for all therein regardless of which elements shall actually be accommodated in the main loop during use (for example, further attachment elements).

As a consequence, the safety ring may be maintained stably in ideal positions for the safety of the user, without risks of inadvertent movements that could move it to hazardous positions. The risk that the auxiliary loop breaks due to concentrated loads is also reduced due to the correct positioning of the safety ring under any condition.

Lastly, the risk of mutual interference between the safety ring and other attachment elements, such as for example an attachment element accommodated in the main loop, is extremely low due to the fact that the main loop and the auxiliary loop are distinct with respect to each other.

The embodiments described above regarding the elements for the attachment of parts of a harness may be subjected - by a man skilled with the aim of meeting specific contingent requirements - to numerous additions, modifications or replacements of elements with other functionally equivalent elements, without departing from the scope of protection of the attached claims.

Each of the characteristics described as belonging to a particular embodiment may be obtained independently from the other described embodiments.

## Claims

1. Element (6) for the attachment of parts of a safety harness (1), in particular thigh straps (3) and a belt (2), comprising a main loop (13) suitable for removable attachment to a chest strap (4) of the harness (1) and a safety ring (16) for attachment to one or more safety elements, **characterised in that it** comprises an auxiliary loop (15) distinct from said main loop (13) and arranged inside the latter, said safety ring (16) having a ring attachment portion (17) irreversibly inserted into said auxiliary loop (15).

2. Attachment element (6) according to claim 1, wherein said main loop (13) is arranged at the upper part in said attachment element (6) and said auxiliary loop (15) is arranged at the lower part in said main loop (13).

3. Attachment element (6) according to claim 1 or 2, wherein said main loop (13) develops according to an axis of the main loop (AP) and said auxiliary loop (15) develops according to an axis of the auxiliary loop (AA), said axes of the main loop (AP) and auxiliary loop (AA) being parallel to each other.

4. Attachment element (6) according to claim 3, wherein said auxiliary loop (15) develops along said axis of the auxiliary loop (AA) for a length equivalent or slightly shorter than the development direction of the main loop (13) along said direction of main loop (AP).

5. Attachment element (6) according to any one of the preceding claims, wherein said main loop (13) and said auxiliary loop (15) are delimited by respective fabric bands or fabric band portions of the main loop (23) and auxiliary loop (24) folded on themselves to form the respective main (13) and auxiliary (15) loops.

6. Attachment element (6) according to the preceding claim, wherein said fabric bands or fabric band portions of the main loop (23) and auxiliary loop (24) respectively comprise fabric strips of the main loop (23' ,23'') and auxiliary loop (24', 24'') respectively sewn at the sewing areas of the main loop (23''') and auxiliary loop (24'''), the fabric strips of the auxiliary loop (24', 24'') being arranged between the fabric strips of the main loop (23', 23'') in such a manner that the sewing area of the main loop (24''') and the sewing area of the auxiliary loop (23''') are overlapped.

7. Attachment element (6) according to any one of the preceding claims, wherein said safety ring (16) includes a main ring loop (21) and an auxiliary ring loop (22) separated from each other by a separation element (20), said auxiliary ring loop (21) being delimited by said ring attachment portion (17) and said separation element (20).

8. Attachment element (6) according to the preceding claim, wherein said safety ring (16) is attached to the attachment element (6) in such a manner that the separation element (20) of the safety ring is external with respect to the main loop (13) and auxiliary loop (15).

9. Attachment element (6) according to claim 7 or 8, wherein said auxiliary ring loop (22) and said ring attachment portion (17) are configured in such a manner that the safety ring (16) may rotate around said axis of the auxiliary loop (AA) with respect to the attachment element (6).

10. Attachment element (6) according to the preceding claim, wherein said separation element (20) of the safety ring (16) is arranged in such a manner to interfere with said fabric band or fabric band portion of the main loop (23) so that said rotations of the safety ring (16) rotating around said axis of the auxiliary loop (AA) are limited width-wise.

11. Attachment element (6) according to any of claims 3 to 10, wherein said safety ring (16) and said auxiliary loop (15) are configured in such a manner that the safety ring (16) is substantially hindered from rotating with respect to the attachment element (6) around further axis with respect to the axis of the auxiliary loop (AA).

12. Attachment element (6) according to any one of the preceding claims, wherein said safety ring (16) and said auxiliary loop (15) are configured in such a manner that the safety ring (16) is substantially hindered from performing translational movements with respect to the attachment element (6).

13. Safety harness (1) comprising an attachment element (6) according to any one of the preceding claims.

## Patentansprüche

1. Element (6) für das Befestigen von Teilen eines Sicherheitsgeschirrs (1), insbesondere von Schenkelgurten (3) und von einem Gürtel (2), umfassend:
eine Hauptschlaufe (13), die zum lösbaren Befestigen an einem Brustgurt (4) des Geschirrs (1) geeignet ist, und einen Sicherheitsring (16) zum Befestigen an einem oder mehreren Sicherheitselementen,
**dadurch gekennzeichnet, dass** es eine Hilfsschlaufe (15) umfasst, die von der Hauptschlaufe (13) verschieden ist und innerhalb der Letzteren angeordnet ist, wobei der Sicherheitsring (16) einen Ringbefestigungsabschnitt (17) aufweist, der in der Hilfsschlaufe (15) irreversibel eingeführt ist.

2. Befestigungselement (6) nach Anspruch 1,
wobei die Hauptschlaufe (13) an dem oberen Teil in dem Befestigungselement (6) angeordnet ist und wobei die Hilfsschlaufe (15) an dem unteren Teil in der Hauptschlaufe (13) angeordnet ist.

3. Befestigungselement (6) nach Anspruch 1 oder 2,
wobei die Hauptschlaufe (13) sich gemäß einer Achse der Hauptschlaufe (AP) entfaltet und wobei die Hilfsschlaufe (15) sich gemäß einer Achse der Hilfsschlaufe (AA) entfaltet, wobei die Achse der Hauptschlaufe (AP) um die Achse der Hilfsschlaufe (AA) zueinander parallel sind.

4. Befestigungselement (6) nach Anspruch 3,
wobei die Hilfsschlaufe (15) sich entlang der Achse der Hilfsschlaufe (AA) für eine Länge entfaltet, die der Entfaltungsrichtung der Hauptschlaufe (13) entlang der Richtung der Hauptschlaufe (AP) äquivalent oder geringfügig kürzer ist.

5. Befestigungselement (6) nach einem der vorhergehenden Ansprüche, wobei die Hauptschlaufe (13) und die Hilfsschlaufe (15) durch jeweilige Stoffbänder oder Stoffbandabschnitte der Hauptschlaufe (23) und der Hilfsschlaufe (24) begrenzt sind, die auf sich selbst gefaltet sind, um die jeweilige Hauptschlaufe (13) und Hilfsschlaufe (15) zu bilden.

6. Befestigungselement (6) nach dem vorhergehenden Anspruch,
wobei die Stoffbänder oder die Stoffbandabschnitte der Hauptschlaufe (23) beziehungsweise der Hilfsschlaufe (24) Stoffstreifen der Hauptschlaufe (23', 23") und der Hilfsschlaufe (24', 24") umfassen, die jeweils an den Nahtbereichen der Hauptschlaufe (23''') und der Hilfsschlaufe (24''') genäht sind, wobei die Stoffstreifen der Hilfsschlaufe (24', 24") zwischen den Stoffstreifen der Hauptschlaufe (23', 23") derart angeordnet sind, dass der Nahtbereich der Hauptschlaufe (24''') und der Nahtbereich der Hilfsschlaufe (23''') sich überlappen.

7. Befestigungselement (6) nach einem der vorhergehenden Ansprüche,
wobei der Sicherheitsring (16) eine Hauptringschlaufe (21) und eine Hilfsringschlaufe (22) umfasst, die voneinander durch ein Trennelement (20) getrennt sind, wobei die Hilfsringschlaufe (21) durch den Ringbefestigungsabschnitt (17) und das Trennelement (20) begrenzt ist.

8. Befestigungselement (6) nach dem vorhergehenden Anspruch,
wobei der Sicherheitsring (16) an dem Befestigungselement (6) derart befestigt ist, dass das Trennelement (20) des Sicherheitsrings bezüglich der Hauptschlaufe (13) und der Hilfsschlaufe (15) außerhalb liegt.

9. Befestigungselement (6) nach Anspruch 7 oder 8, wobei die Hilfsringschlaufe (22) und der Ringbefestigungsabschnitt (17) derart konfiguriert sind, dass der Sicherheitsring (16) sich um die Achse der Hilfsschlaufe (AA) bezüglich des Befestigungselements (6) drehen kann.

10. Befestigungselement (6) nach dem vorhergehenden Anspruch,
wobei das Trennelement (20) des Sicherheitsrings (16) derart angeordnet ist, dass es das Stoffband oder den Stoffbandabschnitt der Hauptschlaufe (23) beeinflusst, so dass die Drehungen des Sicherheitsrings (16), welcher sich um die Achse der Hilfsschlaufe (AA) dreht, in der Breite eingeschränkt sind.

11. Befestigungselement (6) nach einem der Ansprüche 3 bis 10,
wobei der Sicherheitsring (16) und die Hilfsschlaufe (15) derart konfiguriert sind, dass der Sicherheitsring (16) wesentlich gehindert wird, sich bezüglich des Befestigungselements (6) um eine weitere Achse bezüglich der Achse der Hilfsschlaufe (AA) zu drehen.

12. Befestigungselement (6) nach einem der vorhergehenden Ansprüche,
wobei der Sicherheitsring (16) und die Hilfsschlaufe (15) derart konfiguriert sind, dass der Sicherheitsring (16) wesentlich gehindert wird, Translationsbewegungen bezüglich des Befestigungselements (6) durchzuführen.

13. Sicherheitsgeschirr (1) umfassend ein Befestigungselement (6) nach einem der vorhergehenden Ansprüche.

## Revendications

1. Elément (6) pour fixer les parties d'un harnais de sécurité (1), en particulier des sangles de cuisse (3) et une ceinture (2), comprenant une boucle principale (13) appropriée pour se fixer de manière amovible à une sangle thoracique (4) du harnais (1) et un anneau de sécurité (16) pour se fixer à un ou plusieurs éléments de sécurité, **caractérisé en ce qu'**il comprend une boucle auxiliaire (15) distincte de ladite boucle principale (13) et agencée à l'intérieur de cette dernière, ledit anneau de sécurité (16) ayant une partie de fixation annulaire (17) insérée de manière irréversible dans ladite boucle auxiliaire (15).

2. Elément de fixation (6) selon la revendication 1, dans lequel ladite boucle principale (13) est agencée au niveau de la partie supérieure dans ledit élément de fixation (6) et ladite boucle auxiliaire (15) est agencée au niveau de la partie inférieure de ladite boucle principale (13).

3. Elément de fixation (6) selon la revendication 1 ou 2, dans lequel ladite boucle principale (13) se développe selon un axe de la boucle principale (AP) et ladite boucle auxiliaire (15) se développe selon un axe de la boucle auxiliaire (AA), lesdits axes de ladite boucle principale (AP) et de la boucle auxiliaire (AA) étant parallèles entre eux.

4. Elément de fixation (6) selon la revendication 3, dans lequel ladite boucle auxiliaire (15) se développe le long dudit axe de la boucle auxiliaire (AA) sur une longueur équivalente ou légèrement plus courte que la direction de développement de la boucle principale (13) le long de ladite direction de la boucle principale (AP).

5. Elément de fixation (6) selon l'une quelconque des revendications précédentes, dans lequel ladite boucle principale (13) et ladite boucle auxiliaire (15) sont délimitées par des bandes de tissu ou des parties de bande de tissu respectives de la boucle principale (23) et de la boucle auxiliaire (24) repliées sur elles-mêmes afin de former les boucles principale (13) et auxiliaire (15) respectives.

6. Elément de fixation (6) selon la revendication précédente, dans lequel lesdites bandes de tissu ou parties de bande de tissu de la boucle principale (23) et de la boucle auxiliaire (24) comprennent respectivement des bandes de tissu de la boucle principale (23', 23'') et de la boucle auxiliaire (24', 24'') respectivement cousues au niveau des zones de couture de la boucle principale (23''') et de la boucle auxiliaire (24'''), les bandes de tissu de la boucle auxiliaire (24', 24'') étant agencées entre les bandes de tissu de la boucle principale (23', 23'') de sorte que la zone de couture de la boucle principale (24''') et la zone de couture de la boucle auxiliaire (23''') se chevauchent.

7. Elément de fixation (6) selon l'une quelconque des revendications précédentes, dans lequel ledit anneau de sécurité (16) comprend une boucle d'anneau principale (21) et une boucle d'anneau auxiliaire (22) séparées l'une de l'autre par un élément de séparation (20), ladite boucle d'anneau auxiliaire (21) étant délimitée par ladite partie de fixation annulaire (17) et ledit élément de séparation (20).

8. Elément de fixation (6) selon l'une quelconque des revendications précédentes, dans lequel ledit anneau de sécurité (16) est fixé à l'élément de fixation (6) de sorte que l'élément de séparation (20) de l'anneau de sécurité est externe par rapport à la boucle principale (13) et la boucle auxiliaire (15).

9. Elément de fixation (6) selon la revendication 7 ou 8, dans lequel ladite boucle d'anneau auxiliaire (22) et ladite partie de fixation annulaire (17) sont configurées de sorte que l'anneau de sécurité (16) peut tourner autour dudit axe de la boucle auxiliaire (AA) par rapport à l'élément de fixation (6).

10. Elément de fixation (6) selon la revendication précédente, dans lequel ledit élément de séparation (20) de l'anneau de sécurité (16) est agencé afin d'interférer avec ladite bande de tissu ou partie de bande de tissu de la boucle principale (23) de sorte que lesdites rotations de l'anneau de sécurité (16) tournant autour dudit axe de la boucle auxiliaire (AA) sont limitées dans le sens de la largeur.

11. Elément de fixation (6) selon l'une quelconque des revendications 3 à 10, dans lequel ledit anneau de sécurité (16) et ladite boucle auxiliaire (15) sont configurés de sorte que la rotation de l'anneau de sécurité (16) est sensiblement empêchée par rapport à l'élément de fixation (6) autour d'un autre axe par rapport à l'axe de la boucle auxiliaire (AA).

12. Elément de fixation (6) selon l'une quelconque des revendications précédentes, dans lequel ledit anneau de sécurité (16) et ladite boucle auxiliaire (15) sont configurés de sorte que la réalisation des mouvements de translation de l'anneau de sécurité (16) est sensiblement empêchée par rapport à l'élément de fixation (6).

13. Harnais de sécurité (1) comprenant un élément de fixation (6) selon l'une quelconque des revendications précédentes.
